# EUROPÄISCHE PATENTSCHRIFT

(11) **EP 0 467 157 B1**
(45) Veröffentlichungstag und Bekanntmachung des Hinweises auf die Patenterteilung: **08.10.1997**
(21) Anmeldenummer: 91111088.0
(22) Anmeldetag: 04.07.1991
(51) Int. Cl.: G10L 5/06

(54) **Sprachgesteuertes Gerät der Unterhaltungselektronik, insbesondere Videorecorder**
Voice-operated device for entertainment electronic, especially for video recorder
Dispositif de commande vocale pour électronique de loisir, en particulier pour enregistreur vidéo

(30) Priorität: 14.07.1990 DE 4022511
(43) Veröffentlichungstag der Anmeldung: 22.01.1992
(73) Patentinhaber: GRUNDIG Aktiengesellschaft, 90762 Fürth (DE)
(72) Erfinder: Mager, Gerhard, Grundig E.M.V., Max Grundig, D-8510 Fuerth (DE)

(56) Entgegenhaltungen:
- EP-A- 0 141 289
- EP-A- 0 145 669
- WO-A-91/07835
- DE-A- 3 803 220
- COMPCON '79 (PROCEEDINGS OF THE 18TH IEEE COMPUTER SOCIETY INTERNATIONAL CONFERENCE, San Francisco, 26. Februar - 1. Mai 1979), Seiten 19-22, IEEE, New York, US; J.A. CLARK et al.: "A spoken word recognition system for aiding the severely paralyzed"
- IBM TECHNICAL DISCLOSURE BULLETIN, Band 13, Nr. 3, August 1970, Seite 731, New York, US; G.L. CLAPPER: "Word recognition system with automatic selection of word library"

## Beschreibung

Die Erfindung betrifft ein sprachgesteuertes Gerät der Unterhaltungselektronik gemäß dem Oberbegriff des Patentanspruchs 1.

Die Bedienung moderner Geräte der Unterhaltungselektronik ist im Laufe der Zeit für den Benutzer immer schwieriger geworden, zumal gegenüber bisherigen Geräten viele neue Gerätefunktionen hinzugekommen sind. Die Bedienung des Geräts, z.B. eines Videorecorders, kann über einen Ultraschall- oder Infrarot-Fernbedienungsgeber oder auch durch eine am Gerät angeordnete Tastatur erfolgen, wobei in der Regel die eingegebenen Steuerbefehle über eine LED/LCD-Anzeige kontrolliert werden können.

Aus der DE-PS 31 04 843 ist ein Videorecorder mit mehreren Bedienungselementen bekannt, welcher zur Herstellung eines Dialogs zwischen dem Benutzer und dem Videorecorder mit einem Fernsehempfänger verbunden ist. Um den Dialog zu ermöglichen, ist in einem Speicher des Videorecorders die Bedienungsanleitung gespeichert. Mit dem Speicher ist ein Mikroprozessor verbunden. Der Mikroprozessor erzeugt zusätzlich zu dem auf dem Videoband aufgezeichneten Signal Signale für die Bild- und/oder Tonwiedergabe am angeschlossenen Fernsehempfänger, so daß die Bedienung, Programmierung oder Überwachung des Videorecorders erleichtert wird. Bei einer Ausführungsform des Videorecorders ist auch vorgesehen, daß dieser eine Schaltung zur synthetischen Erzeugung von Sprachsignalen enthält.

Aus der DE-OS 39 28 664 ist ein Videorecorder bekannt, bei dem der Benutzer zusätzlich zu den Programmdaten eine Ansage abspeichern kann. Hierzu enthält der Videorecorder u.a. einen mit dem Mikrofon verbundenen A/D-Umsetzer, dessen Ausgang an ein RAM (Random Access Memory) angeschlossen ist. Mit dem RAM ist ein Sprachprozessor verbunden. Mittels Sprachprozessor, D/A-Umsetzer, Tiefpaßfilter und Lautsprecher wird die Ansage vor Beginn der Aufzeichnung des Programms wiedergegeben, wodurch der Benutzer an die bevorstehende Aufzeichnung des Programms erinnert wird.

Die beim Gegenstand der DE-PS 31 04 843 oder DE-OS 39 28 664 vorgeschlagene akustische Bedienerführung erleichert die Programmierung oder Überwachung des Videorecorders. Um zusätzlich eine Sprachsteuerung bei der Bedienung des Geräts der Unterhaltungselektronik zu ermöglichen, ist beim Gegenstand der FR-A1-23 12 814 der Einsatz eines Sprachanalysators im Gerät vorgeschlagen worden. Der Sprachanalysator wandelt die akustisch eingegebenen Wortbefehle in elektrische Steuersignale um, wodurch z.B. auch ein Körperbehinderter das Gerät bedienen kann.

Sprachgesteuerte Geräte, Systeme oder Anlagen enthalten in der Regel einen Sprachverarbeitungsprozessor, welcher mit einem Referenzmuster-Speicher, z.B. Magnetbandspeicher, Halbleiterspeicher, Diskette, Festplatte usw. in Verbindung steht. Die Spracheingabe beschränkt sich dabei meist auf die Eingabe von Steuerbefehlen zur Funktionssteuerung oder auf die Dialogsteuerung bei der Kommunikation zwischen Mensch und Gerät mit Sprachein- und -ausgabe. Die Spracherkennungssysteme sind häufig sprecherabhängig, d.h. jeder Sprecher muß in einer "Trainingsphase" dem Spracherkennungssystem seine Sprachmuster durch ein- oder mehrmaliges Sprechen bekannt machen, wodurch sogenannte Referenzmuster gewonnen werden. Sprecherabhängige Spracherkennungssysteme ermöglichen die sprecherabhängige Erkennung von einzelnen gesprochenen Worten aus einem aufgabenspezifisch festgelegten Wortschatz von bis zu 1000 Worten. Die dabei erreichbare Fehlerrate liegt unter 2%. Neben der Eingabe von Einzelwörtern ist auch die Eingabe von Wortketten möglich. Die Eingabe von Wortketten bedeutet in der Regel ein geringeres Vokabular, höhere Fehlerraten und einen hohen Schaltungsaufwand.

Bei sprecherunabhängigen Spracherkennungssystemen ist keine vorbereitende "Trainingsphase" notwendig. Bei einem solchen System werden die Sprachstichproben vieler Sprecher herangezogen und je nach Ähnlichkeit zu sogenannten Clustern zusammengefaßt. Sprecherunabhängige Spracherkennungssysteme sind meist für ein bestimmtes Vokabular und ein spezielles akustisches Umfeld ausgelegt. In der Regel liegt dabei die mittlere Fehlerrate zwischen 2% und 3%.

Wie Untersuchungen deutlich zeigten, kann nur in wenigen Fällen die Tastatur durch Spracheingabeeinrichtungen ersetzt werden. Letztendlich müssen neue Systemkonzepte entwickelt werden, so daß aus Kostengründen in handelsüblichen Geräten der Unterhaltungselektronik eine Spracheingabe nicht vorgesehen ist. Nur für bestimmte zahlenmäßig kleine Benutzergruppen, wie Körperbehinderte usw., werden in Sonderanfertigung entsprechend angepaßte Geräte hergestellt.

Schließlich ist aus DE-PS 27 55 633 eine Fernbedienung mit einem eingebauten Sprachanalysator bekannt, welcher so ausgelegt ist, daß dieser die gleichen Signale erzeugt, welche auch bei Betätigung der entsprechenden Bedienungselemente im handelsüblichen Fernbedienungsgeber abgegeben werden würden.

Aus der EP-A-0 145 669 ist ein sprachgesteuertes Gerät der Unterhaltungselektronik, mit Bedienelementen und mit einem mit den Bedienelementen in Verbindung stehenden Mikroprozessor zum Steuern, Ein- und Umschalten von variablen und festen Gerätefunktionen bekannt. Die einzelnen Gerätefunktionen werden durch akustische Eingabe von Befehlswörtern in einen mit dem Mikroprozessor verbundenen Sprachanalysator gesteuert. Weiterhin ist im Gerät ein erster Mikroprozessor angeordnet, welcher während eines Lernvorgangs das akustisch eingegebene Befehlswort mit einem bestimmten Funktionsbefehl verknüpft, wobei in der Betriebsphase der erste Mikroprozessor mit Hilfe des Sprachanalysators den Sprachbefehl analysiert und bei einem erkannten Sprachbefehl den zugehörigen Funktionsbefehl einem zweiten Mikroprozessor zuführt, welcher die verschiedenen Gerätefunktionen steuert.

Schließlich ist aus DE-A-38 03 220 ein Haushaltsgerät mit einer Programmschalteinrichtung bekannt, bei dem mittels Sprachsteuerung die Auswahl unterschiedlicher Arbeitsprogrammme erfolgt. Die Zuordnung zwischen Codewort und Tastschalter ist dabei benutzerindividuell. Von Nachteil ist jedoch, daß eine Kontrollmöglichkeit des in einem Sprachmusterspeicher eingegebenen Codeworts für den Benutzer nicht möglich ist. Demzufolge ist der Benutzer gezwungen, sich sowohl das Codewort als solches zu merken, als auch dieses Codewort jeweils in gleicher Weise auszusprechen. Weiterhin ist der Benutzer gezwungen, bei einer unbeabsichtigten Änderung des Codeworts eine entsprechende Neu-Zuordnung durch Betätigen des zugehörigen Tastschalters vorzunehmen.

Der Erfindung liegt die Aufgabe zugrunde, ein sprachgesteuertes Gerät der Unterhaltungselektronik derart auszugestalten, daß bei vergleichsweise geringem Schaltungsaufwand hierfür ein Höchstmaß an Funktionssicherheit erreicht wird und Fehlsteuerungen möglichst vermieden werden.

Diese Aufgabe wird bei einem gattungsgemäßen sprachgesteuerten Gerät durch die im kennzeichnenden Teil des Patentanspruchs 1 angegebenen Merkmale gelöst.

Das erfindungsgemäße sprachgesteuerte Gerät weist den Vorteil auf, daß der Schaltungsaufwand vergleichsweise gering ist und trotzdem auch für einen ungeübten Benutzer die Programmierung der Sprachbefehle während des Lernvorgangs ermöglicht wird. Die beiden Mikroprozessoren können entsprechend dem Prinzip der verteilten Steuerung für den jeweiligen Aufgabenbereich ausgelegt werden, wobei ein handelsüblicher in bisherigen Geräten ohne Sprachsteuerung benutzter Mikroprozessor als zweiter Mikroprozessor eingesetzt werden kann. Dies ist darauf zurückzuführen, daß durch die Verknüpfung von Sprachbefehl und über eine Taste und/oder alphanumerische Tastatur. eingegebenen Funktionsbefehl die gleichen Signale dem zweiten Mikroprozessor zugeführt werden, welche auch bei der Betätigung einer am Gerät angeordneten Taste erzeugt werden würden. Weiterhin ist von Vorteil, daß auch die beim Gegenstand der DE-PS 31 04843 oder DE-OS 3928664 vorgeschlagene akustische Bedienerführung ebenfalls benutzt werden kann, so daß nicht nur die Bedienung des Geräts bestimmten Benutzergruppen erleichtert wird, sondern auch die bei professionellen Geräten bereitgestellten Möglichkeiten genutzt werden können.

Weiterhin ist von Vorteil, daß eine Fehlsteuerung durch die optische Rückmeldung zuverlässig vermieden werden kann. Den Benutzern wird dabei nicht nur die Kontrolle der Zuordnung von Sprachbefehl und vom Mikroprozessor ausgeführter Funktion ermöglicht, sondern darüber hinaus kann die Bedienung des Geräts auch im Dunkeln erfolgen.

Sind gemäß Patentanspruch 2 die Sprachbefehle von verschiedenen Benutzern in getrennten Speicherbereichen gespeichert, so kann dadurch auf einfache Art und Weise die Bedienungsberechtigung des Geräts sichergestellt werden. Dies ist darauf zurückzuführen, daß jeder Mensch in seiner Stimme ein unverwechselbares Lautspektrum besitzt, so daß es möglich ist, nur einer Person oder Gruppe die Benutzung des Geräts zu gestatten. In einer Gerätekombination können die verschiedenen Geräte durch entsprechende Worte unabhängig voneinander gesteuert werden. Weiterhin ist es möglich, bestimmte Gerätefunktionen für bestimmte Benutzer zu sperren.

Die Ausführungsform gemäß Patentanspruch 3 weist den Vorteil auf, daß eine mehrsprachige Bedienung des Geräts ermöglicht wird (wobei werksseitig eine Programmierung der verschiedenen Funktionsbefehle und Zuordnung der entsprechenden Begriffe bzw. Textdaten erfolgt). Weiterhin ist von Vorteil, daß - bei beispielsweise falscher Schreibweise des Funktionsbefehls - der Benutzer eine entsprechende Korrektur vornehmen kann.

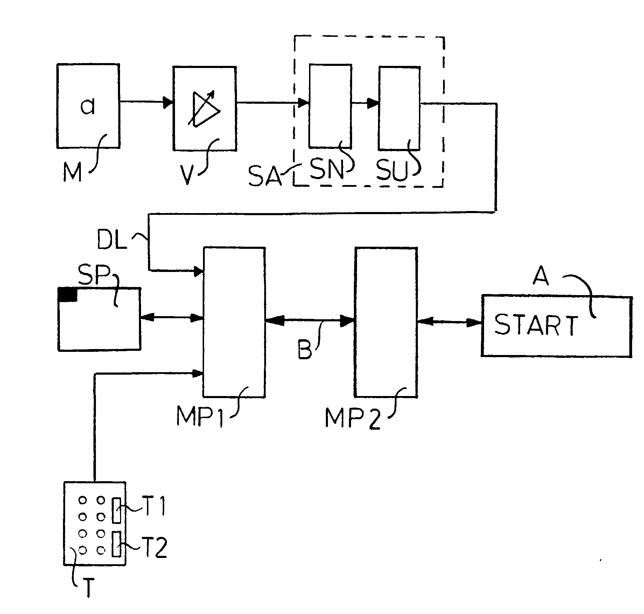

Die Erfindung wird im folgenden anhand einer in der Zeichnung dargestellten Ausführungsform näher beschrieben und erläutert.

Bei der in der Figur dargestellten Ausführungsform wird von dem Einsatz bei einem Videorecorder ausgegangen. Grundsätzlich jedoch kann ohne Änderung der Erfindung der Einsatz in jedem sprachgesteuerten Gerät erfolgen, wobei eine Fehlsteuerung durch den Benutzer vermieden und ein Höchstmaß an Funktionssicherheit erreicht wird.

Bei dem in der Figur dargestellten Videorecorder sind aus Gründen der Übersichtlichkeit die Baugruppen zur Ausführung der einzelnen Gerätefunktionen, Stromversorgung usw. nicht dargestellt. Im Videorecorder G ist ein erster Mikroprozessor MP1 angeordnet, welcher während eines Lernvorgangs das akustisch eingegebene Befehlswort mit einem bestimmten, über eine Funktionstaste T1 oder über alphanumerische Tastatur T eingegebenen Funktionsbefehl verknüpft. Zur Spracheingabe ist ein Mikrofon M am Videorecorder G angeordnet, welches die Schallwellen der menschlichen Stimme in elektrische Signale umwandelt. Mit dem Mikrofon M ist ein geregelter Verstärker V verbunden, welcher die Signalwechselspannung verstärkt und dafür sorgt, daß einem nachgeordneten Sprachanalysator SA eine Signalwechselspannung konstanter Einhüllenden zugeführt wird.

Der in der Zeichnung dargestellte Sprachanalysator SA besteht aus zwei Baugruppen SN, SU. Die Störgeräusch- und Nebengeräuschunterdrückungsschaltung SN hat die Aufgabe, soweit wie möglich alle Signale außer der Signalwechselspannung, die von der menschlichen Stimme herrührt, zu unterdrücken. Mit der Störgeräusch- und Nebengeräuschunterdrückungsschaltung SN ist der Umwandler SU verbunden, welcher die analoge Signalwechselspannung in entsprechende Sprachdaten umwandelt. Diese Sprachdaten (digitale Information) werden über eine Datenleitung DL dem ersten Mikroprozessor MP1 zugeführt. Dieser Mikroprozessor MP1 kann in zwei verschiedenen Betriebsarten arbeiten. In der ersten Betriebsart, auch als Lernvorgang bezeichnet, wird - wie bereits erwähnt - eine Zuordnung von Sprachbefehl und Funktionsbefehl vorgenommen. Dieser Vorgang kann vom Benutzer auf verschiedene Art und Weise durchgeführt werden.

Bei einer ersten Ausführungsform betätigt der Benutzer eine bestimmte Taste T1, beispielsweise die Starttaste und gibt anschließend über die alphanumerische Tastatur T das Wort "Start" ein. Dieses Wort "Start" wird bei der nachfolgenden akustischen Eingabe des Befehlswortes derart verknüpft, daß die Sprachdaten mit dem entsprechenden Codewort zusammen auf einem Speicherplatz eines Speichers SP gespeichert werden.

Bei einer zweiten Ausführungsform betätigt der Benutzer eine Sprachauswahltaste T2, gibt anschließend über die alphanumerische Tastatur T die entsprechenden Schriftdaten und schließlich das entsprechende Befehlswort akustisch ein. Bei einer solchen Durchführung des Lernvorgangs kann manchmal das Problem auftreten, daß der Benutzer über die alphanumerische Tastatur T das entsprechende Wort falsch einschreibt. In der nachfolgenden Betriebsphase, bei der ein Vergleich der eingegebenen Schriftdaten mit gespeicherten Schriftdaten vorgenommen wird, kann kein entsprechendes Wort gefunden werden und somit ist eine Ausführung des eingegebenen Sprachbefehls nicht möglich.

Dieser Nachteil kann dadurch vermieden werden, daß nach Betätigung der Sprachauswahltaste T2 der Benutzer anschließend eine entsprechende Funktionstaste, z.B. T1, betätigt, so daß die nachfolgende Eingabe über die alphanumerische Tastatur T benutzerspezifisch vorgenommen werden kann.

Schließlich ist es auch möglich, eine mit dem zweiten Mikroprozessor MP2 verbundene Anzeige A insofern auszunutzen, indem nach Betätigung einer entsprechenden Funktionstaste T1 und anschließender Spracheingabe, an der Anzeige eine entsprechende Rückmeldung der werkseitig in den Speicher SP eingegebenen Schriftdaten erfolgt.

Es ist auch möglich, die alphanumerische Tastatur T als Hilfstastatur auszugestalten, welche zur normalen Bedienung des Videorecorders G nicht benötigt wird. Durch entsprechende Doppelbelegung der einzelnen Tasten kann der für die Tastatur erforderliche Platz klein gehalten werden.

Wesentliche Steuerungsaufgabe des ersten Mikroprozessors MP1 ist während des Lernvorgangs die Anzeige der zu erlernenden Bezeichnung der jeweiligen Funktion, z.B. "play", Verknüpfung der Funktion "play" mit dem entsprechenden Sprachbfehl des Benutzers und Zuordnung der entsprechenden Gerätefunktion "play".

In der Betriebsphase wird durch ersten Mikroprozessor MP1 und Sprachanalysator SA der Sprachbefehl analysiert und bei einem erkannten Sprachbefehl wird der zugehörige Funktionsbefehl dem zweiten Mikroprozessor MP2 zugeführt, welcher die verschiedenen Gerätefunktionen steuert.

Hierzu werden über die Datenleitung DL Sprachdaten dem Mikroprozessor MP1 zugeführt, welcher zur Feststellung der Gleichartigkeit zwischen Sprachdaten und entsprechenden im Speicher SP abgespeicherten Daten, diese aus dem Speicher SP ausliest und mit den aktuellen Sprachdaten vergleicht. Wird zwischen beiden Informationen eine Gleichartigkeit festgestellt, meldet der Mikroprozessor MP1 über einen Bus B die entsprechenden Gerätefunktionen an den als Master arbeitenden zweiten Mikroprozessor MP2. Über die Ausgabeports des zweiten Mikroprozessors MP2 erfolgt nun die Ansteuerung der verschiedenen Baugruppen zur Ausführung der verschiedenen Betriebsfunktionen. Weiterhin wird zur Ermöglichung der optischen Rückmeldung die entsprechende Gerätefunktion, z.B. "play", an der Anzeige A dargestellt, wobei es auch möglich ist, eine entsprechende Anzeige auf dem Bildschirm eines an den Videorecorder G angeschlossenen Fernsehempfängers vorzunehmen, wie dies in der DE-PS 31 04 843 beschrieben und erläutert ist.

## Patentansprüche

1. Sprachgesteuertes Gerät der Unterhaltungselektronik, insbesondere Videorecorder, mit Bedienelementen wie Tasten, Sensoren und/oder Stellgliedern und mit einem mit den Bedienelementen in Verbindung stehenden Mikroprozessor zum Steuern, Ein- und Umschalten von variablen und festen Gerätefunktionen, wobei einzelne Gerätefunktionen durch akustische Eingabe von Befehlswörtern in einen mit dem Mikroprozessor verbundenen Sprachanalysator (SA) ebenfalls steuerbar sind, wobei im Gerät (G) ein erster Mikroprozessor (MP1) angeordnet ist, welcher während eines Lernvorgangs das akustisch eingegebene Befehlswort mit einem bestimmten Funktionsbefehl verknüpft, und wobei in der Betriebsphase der erste Mikroprozessor (MPI) mit Hilfe des Sprachanalysators (SA) den Sprachbefehl analysiert und bei einem erkannten Sprachbefehl den zugehörigen Funktionsbefehl einem zweiten Mikroprozessor (MP2) zuführt, welcher die verschiedenen Gerätefunktionen steuert,
**dadurch gekennzeichnet**, daß der erste Mikroprozessor (MP1) während eines Lernvorgangs das akustisch eingegebene Befehlswort mit einem bestimmten, über Taste (T1) und/oder alphanumerische Tastatur (T) eingegebenen Funktionsbefehl verknüpft und daß mit dem zweiten Mikroprozessor (MP2) eine Anzeige (A) verbunden ist, welche zur Darstellung der über Taste (T1) oder Tastatur (T) eingegebenen Zeichen und zur Rückmeldung bei der Ausführung des Sprachbefehls dient.

2. Gerät nach Anspruch 1, **dadurch gekennzeichnet**, daß
die Sprachbefehle von verschiedenen Benutzern in getrennten Speicherbereichen eines mit dem ersten Mikroprozessor (MP1) verbundenen Speichers (SP) gespeichert sind.

3. Gerät nach einem oder mehreren der Ansprüche 1 bis 2,
**dadurch gekennzeichnet**, daß die Funktionsbefehle nach Sprache geordnet abgespeichert sind und daß beim Lernvorgang nach Betätigen einer Taste (T1) oder alphanumerischer Tastatur (T) und einer Sprachauswahltaste (T2) das akustisch eingegebene Befehlswort mit dem Funktionsbefehl der jeweiligen Sprache verknüpft wird, welcher zur Rückmeldung angezeigt wird.

## Claims

1. Voice-operated device for entertainment electronics, in particular video recorders, comprising control elements such as keys, sensors and/or actuators and comprising a microprocessor connected to the control elements for controlling, switching-on and switching-over variable and fixed device functions, individual device functions also being operable by audible input of command words into a speech analyser (SA) connected to the microprocessor, there being fitted in the device (G) a first microprocessor (MP1) which links the audibly inputted command word to a particular functional command during a learning process, and the first microprocessor (MP1) analysing the speech command with the aid of the speech analyser (SA) in the operating phase and, when a speech command is recognized, feeding the associated functional command to a second microprocessor (MP2) which controls the various device functions, characterized in that, during a learning operation, the first microprocessor (MP1) links the audibly inputted command word to a particular functional command inputted via a key (T1) and/or an alphanumeric keyboard (T), and in that a display (A) which serves for displaying the symbols entered via a key (T1) or a keyboard (T) and for the purpose of acknowledgement when the speech command is carried out is connected to the second microprocessor (MP2).

2. Device according to Claim 1, characterized in that the speech commands of various users are stored in separate memory regions of a memory (SP) connected to the first microprocessor (MP1).

3. Device according to one or more of Claims 1 to 2, characterized in that the functional commands are arranged and stored according to language and in that, during the learning process, the audibly entered command word is linked with the functional command of the particular language after operating a key (T1) or an alphanumeric keyboard (T) and a language selection key (T2), which functional command is displayed for the purpose of acknowledgement.

## Revendications

1. Appareil à commande vocale pour électronique de loisir, notamment pour enregistreur vidéo, comportant des éléments de commande tels que des touches, des capteurs et/ou des organes de réglage et comportant un microprocesseur qui est relié aux éléments de commande et sert à commander, activer et commuter des fonctions variables et fixes de l'appareil, dans lequel des fonctions individuelles de l'appareil peuvent être également commandées au moyen d'une entrée acoustique de mots d'instruction dans un analyseur vocal (SA) relié au microprocesseur, et dans lequel dans l'appareil (G) est prévu un premier microprocesseur (Mp1), qui pendant une opération d'apprentissage, combine le mot d'instruction introduit acoustiquement à une instruction déterminée de fonction, et dans lequel, pendant la phase de fonctionnement, le premier microprocesseur (MP1) analyse l'instruction vocale au moyen de l'analyseur vocal (SA) et, dans le cas où une instruction vocale est identifiée, envoie l'instruction de fonction associée à un second microprocesseur (MP2), qui commande les différentes fonctions de l'appareil, caractérisé en ce que pendant le processus d'apprentissage, le premier microprocesseur (MP1) combine le mot d'instruction introduit acoustiquement à une instruction de fonction déterminée introduite par l'intermédiaire d'une touche (Tl) et/ou d'un clavier alphanumérique (T), et qu'au second microprocesseur (MP2) est relié un dispositif d'affichage (A) qui est utilisé pour la représentation des signaux introduits au moyen de la touche (Tl) ou du clavier (T), et pour la signalisation en retour lors de l'exécution de l'instruction vocale.

2. Appareil selon la revendication 1, caractérisé en ce que les instructions vocales de différents utilisateurs sont mémorisées dans des zones séparées d'une mémoire (SP) reliée au premier microprocesseur (MP1).

3. Appareil selon une ou plusieurs des revendications 1 et 2, caractérisé en ce que les instructions de fonctions sont mémorisées en étant rangées en fonction de la langue, et que lors du processus d'apprentissage, après actionnement d'une touche (T1) ou d'un clavier alphanumérique (T) et d'une touche de sélection vocale (T2), le mot d'instruction introduit acoustiquement est combiné à l'instruction de fonction de la langue considérée, qui est affichée pour la signalisation en retour.
